# DEMANDE DE BREVET EUROPEEN

(11) **EP 4 390 509 A1**
(43) Date de publication de la demande: **26.06.2024**
(21) Numéro de dépôt: 23213240.7
(22) Date de dépôt: 30.11.2023
(51) Int. Cl.: G02B 27/01

(54) **PROCEDE DE GESTION D'UN AFFICHEUR TÊTE-HAUTE, PRODUIT PROGRAMME D'ORDINATEUR ASSOCIE ET AFFICHEUR TÊTE-HAUTE ASSOCIE**

(30) Priorité: 20.12.2022 FR 2213937
(71) Demandeur: THALES, 92190 Meudon (FR)
(72) Inventeur: NOMINE, Louis, 33700 Mérignac (FR); GAULUE, Eric, 33700 Mérignac (FR); FRANCOIS, Jean-Michel, 33700 Mérignac (FR)
(74) Mandataire: Atout PI Laplace

(57) **Abrégé**

Procédé de gestion d'un afficheur tête-haute (HMD) présentant un champ de vue et un axe de visée prédéterminés et adapté pour afficher une pluralité de messages graphiques, ledit procédé comprenant les étapes suivantes mises en oeuvre lorsque ledit afficheur tête-haute est porté par un utilisateur (U) dans un environnement prédéterminé (EP) comprenant une pluralité d'interfaces d'information (IN1-IN6) :
A1. déterminer une première donnée (D1) relative à une position et une orientation d'une tête dudit utilisateur par rapport audit environnement à partir d'informations relatives à un agencement spatial dudit environnement (EP)
B. modifier une luminance dudit afficheur tête-haute et/ou ajuster lesdits messages graphiques, en fonction d'un ensemble de données comprenant la première donnée et comprenant des informations relatives auxdites interfaces.

## Description

### Domaine technique :

La présente invention concerne le domaine des afficheurs tête-haute portés (HWD pour *« Head Worn Display »* ou HMD *« Head Mounted Display »* en anglais) et la gestion de leur affichage, plus particulièrement celui des afficheurs tête-haute destinés à être portés dans un poste de pilotage d'un véhicule.

### Technique antérieure :

De manière connue en soi, les dispositifs d'affichage tête haute portés permettent d'afficher des objets virtuels sur une surface d'affichage « portée » par l'utilisateur, c'est-à-dire intégrée dans un casque, des lunettes ou tout autre dispositif liant mécaniquement le mouvement de la surface d'affichage au mouvement de l'utilisateur.

Ces dispositifs permettent d'afficher ces objets virtuels en position dite « conforme », c'est-à-dire que leurs images se superposent parfaitement aux emplacements que des objets réels occupent à l'extérieur. Ainsi, l'image d'une piste synthétique est affichée en superposition parfaite à l'endroit exact que la piste réelle occupe sur le terrain. Il en est de même, par exemple, de la ligne d'horizon.

Ainsi, par exemple, lorsque le dispositif d'affichage tête haute porté est utilisé dans un porteur tel qu'un aéronef, il est possible d'associer un référentiel de projection lié à l'environnement extérieur de l'aéronef et un autre référentiel de projection lié par exemple à la surface d'affichage ou alors à la tête de l'utilisateur.

Le fait d'afficher des informations dans différents référentiels dans le cas d'un dispositif d'affichage tête haute porté permet par exemple d'afficher des informations par des symboles dont la représentation est liée à un référentiel spécifique (par exemple représentation dans le dispositif d'affichage porté de la ligne d'horizon appartenant au référentiel terrestre local par le dessin d'une ligne synthétique).

Dans le cas d'un aéronef, pour un personnel naviguant utilisant un afficheur tête portée, il peut être problématique d'avoir une superposition d'affichage entre l'afficheur du système tête porté et des différents éléments d'un cockpit : dispositifs de visualisation « Tête Haute » (HUD pour *Head-Up Display* en anglais), écrans du cockpit, EFB *(Electronic Flight Bag),* etc ....

En outre, en fonction du type de mission, les afficheurs tête portés sont susceptibles d'afficher un très grand nombre de messages graphiques : la vitesse, l'angle d'incidence, la ligne d'horizon, l'altitude, un cap, une distance ou un trajet à un objectif, des messages d'avertissement, , etc...

Dans la suite du document, on appellera « message graphique » toute information affichée par l'afficheur tête haute et relative à l'environnement (par exemple l'aéronef) dans lequel l'afficheur est porté. Cette information peut être sous la forme de symbole, de graphique, de texte, de paramètre numérique, etc

La présence permanente de ces messages graphiques est susceptible de surcharger inutilement le champ de vision de l'utilisateur et d'augmenter sa charge mentale. Cette surcharge (appelée *cluttering* en anglais) peut ainsi provoquer un stress chez le pilote ou accroître sa fatigue. Elle peut aussi l'amener à ignorer une information importante présentée par un élément du cockpit.

A l'heure actuelle, si l'utilisateur souhaite éviter cette superposition ou cette surcharge, il doit effectuer un réglage manuel de la luminance ou du niveau d'information affiché (appelé *decluttering* en anglais). Ces solutions engendrent une déconcentration de l'utilisateur lorsqu'il cherche la commande de réglage de luminance ou de *decluttering.* En outre, les réglages manuels sont préconfigurés et présentent en général peu de modes différents, par exemple deux modes : un mode « niveau d'information maximal » dans lequel tous les messages graphiques disponibles sont affichés, et un mode « niveau d'information allégé » dans lequel environ la moitié des messages graphiques disponibles sont affichés (typiquement uniquement les plus critiques). Cette solution souffre donc d'un manque de souplesse dommageable.

Alternativement, l'utilisateur peut retirer l'afficheur tête haute porté. Cependant, cette solution engendre des problématiques de rangement de l'équipement tête porté lorsqu'il n'est pas porté, une perte de temps et un risque d'erreur d'interprétation de certaines données.

L'invention vise à pallier certains des problèmes de l'art antérieur. A cet effet, un objet de l'invention est un procédé de gestion d'un afficheur tête-haute destiné à être porté comprenant une première étape de détection de position et d'orientation de la tête portant l'afficheur par rapport à l'environnement dans lequel l'afficheur est porté. Le procédé comprend une deuxième étape consistant à modifier la luminance de l'afficheur et/ou à ajuster les messages graphiques affichés par l'afficheur, en fonction d'un ensemble de données comprenant la première donnée et comprenant des informations relatives à des interfaces d'information de l'environnement. Ainsi, le procédé de l'invention permet de traiter le problème du *cluttering* de manière automatisée, sans les inconvénients des solutions précitées.

### Résumé de l'invention :

A cet effet, un objet de l'invention est un procédé de gestion d'un afficheur tête-haute présentant un champ de vue et un axe de visée prédéterminés et adapté pour afficher une pluralité de messages graphiques, ledit procédé comprenant les étapes suivantes mises en oeuvre lorsque ledit afficheur tête-haute est porté par un utilisateur dans un environnement prédéterminé comprenant une pluralité d'interfaces d'information:
A1. déterminer une première donnée relative à une position et une orientation d'une tête dudit utilisateur par rapport audit environnement à partir d'informations relatives à un agencement spatial dudit environnement
B. modifier une luminance dudit afficheur tête-haute et/ou ajuster lesdits messages graphiques, en fonction d'un ensemble de données comprenant la première donnée et comprenant des informations relatives auxdites interfaces.

Selon un mode de réalisation, l'ajustement des messages graphiques comprend l'ajustement du contenu et/ou du nombre et/ou d'une position des messages graphiques et dans lequel la première donnée comprend une indication sur une coïncidence du champ de vue avec lesdites interfaces et sur une superposition de l'axe de visée avec lesdites interfaces. De manière préférentielle, l'ajustement du nombre des messages graphiques comprend la suppression d'au moins un des messages graphiques, dit message redondant, lorsque ladite indication et lesdites informations relatives auxdites interfaces indiquent que le champ de vue de l'afficheur tête-haute coïncide avec une desdites d'interfaces présentant ledit message redondant ou une information équivalente.

Selon un mode de réalisation, le procédé de l'invention comprend une étape C postérieure à l'étape B, dans laquelle l'utilisateur modifie une position de l'axe de visée dans le champ de vue de manière à modifier ladite indication sur une superposition de l'axe de visée avec lesdites interfaces lorsque les étapes A1 et B sont ultérieurement mises en oeuvre.

Selon un mode de réalisation, l'ajustement des messages graphiques est effectué uniquement lorsque la première donnée comprend l'indication selon laquelle l'axe de visée est superposé avec une desdites interfaces, en étant à plus de 0,6° à 6° d'un bord de ladite interface ou lorsque la première donnée comprend l'indication selon laquelle le champ de vue coïncide de plus de 0,6° à 6°.

Selon un mode de réalisation, le procédé de l'invention comprend une étape A2 mise en oeuvre avant l'étape B consistant à recevoir des données relatives à un fonctionnement des interfaces, dites deuxièmes données, les deuxièmes données étant comprises dans ledit ensemble de données utilisé dans l'étape B. De manière préférentielle, l'ajustement du nombre de messages graphiques comprend l'affichage d'uniquement au moins un desdits messages graphiques préalablement évalué comme critique, lorsque la première donnée indique que l'axe de visée est superposé à une desdites interfaces préalablement évaluée comme prioritaire dans lesdites informations relatives auxdites interfaces et lorsque la deuxième donnée indique que ladite interface préalablement évaluée comme prioritaire est en marche.

Selon un mode de réalisation, le procédé de l'invention comprend une étape A3 mise en oeuvre avant l'étape B consistant à recevoir au moins une donnée physiologique de l'utilisateur, dite troisième donnée, la troisième donnée étant comprise dans ledit ensemble de données utilisé dans l'étape B.

Selon un mode de réalisation, ledit environnement est un poste de pilotage d'un véhicule.

De manière préférentielle, dans ce mode de réalisation, le procédé de l'invention comprend une étape A4 mise en oeuvre avant l'étape B consistant à recevoir au moins une donnée relative à une phase d'utilisation du véhicule, dite quatrième donnée, la quatrième donnée étant comprise dans ledit ensemble de données utilisé dans l'étape B.

De manière préférentielle, dans ce mode de réalisation, le procédé de l'invention comprend une étape A5 mise en oeuvre avant l'étape B consistant à recevoir au moins une donnée relative à un environnement extérieur du véhicule, dite cinquième donnée, la cinquième donnée étant comprise dans ledit ensemble de données utilisé dans l'étape B.

De manière préférentielle, dans ce mode de réalisation, le procédé de l'invention comprend, l'ajustement du nombre de messages graphiques consiste à afficher un nombre maximal de messages graphiques lorsque la première donnée indique que ledit champ de vue est entièrement superposé avec une région du poste de pilotage n'affichant aucun desdits messages graphiques ou des informations équivalentes, par exemple un pare-brise.

Selon un mode de réalisation, les étapes du procédé de l'invention sont répétées avec une période inférieure ou égale à 100 ms, préférentiellement inférieure à 10 ms.

Un autre objet de l'invention est un produit programme d'ordinateur comprenant des instructions de code permettant d'effectuer les étapes du procédé selon l'invention lorsque ledit programme est exécuté sur un ordinateur.

Un autre objet de l'invention est un afficheur tête-haute destiné à être porté par un utilisateur, ledit afficheur tête-haute présentant un champ de vue et un axe de visée prédéterminés et étant adapté pour afficher une pluralité de messages graphiques, ledit afficheur tête-haute comprenant un processeur adapté pour mettre en oeuvre les étapes du procédé selon l'invention lorsque ledit afficheur tête-haute est porté dans un environnement prédéterminé comprenant une pluralité d'interfaces d'information.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1] une vue schématique d'un système selon l'invention comprenant un afficheur tête-haute selon l'invention et un dispositif de détection de posture,
[Fig.2], une illustration schématique du procédé de l'invention,
[Fig.3], un mode de réalisation dans lequel l'environnement prédéterminé est un poste de pilotage d'un avion de ligne,
[Fig.4], une illustration schématique d'un mode de réalisation du procédé de l'invention,

Dans les figures, sauf contre-indication, les éléments ne sont pas à l'échelle et les références identiques désignent des éléments identiques.

### Description détaillée :

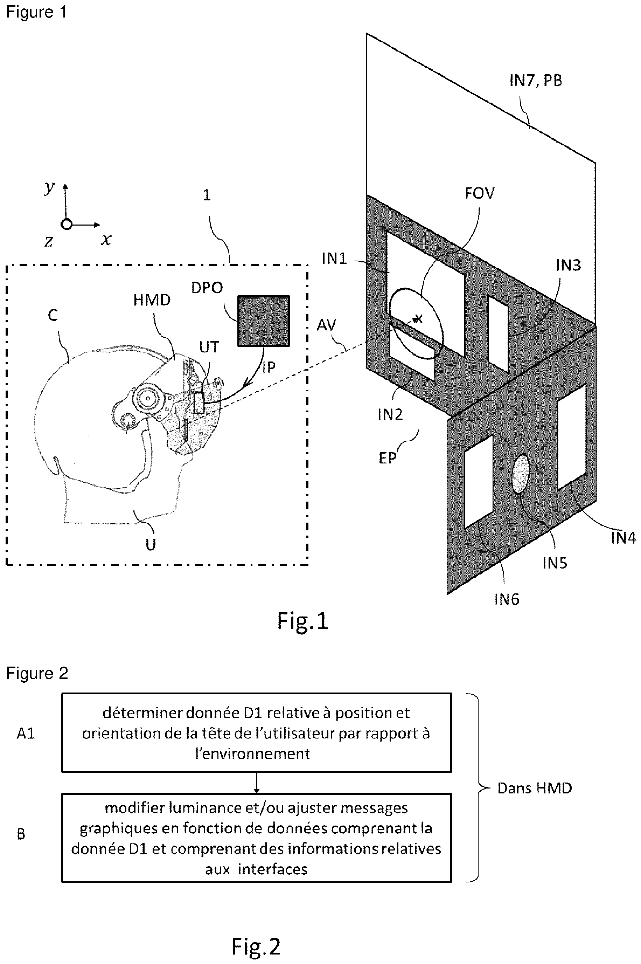

La figure 1 illustre schématiquement un système 1 selon l'invention comprenant un afficheur tête-haute HMD selon l'invention et un dispositif DPO de détection de posture.

L'afficheur tête-haute HMD de l'invention est destiné à être porté, par exemple en étant monté sur un casque, des lunettes ou tout autre dispositif liant mécaniquement le mouvement de la surface d'affichage au mouvement de l'utilisateur U. Il présente un champ de vue FOV et un axe de visée AV prédéterminés et est adapté pour afficher une pluralité de messages graphiques. Un tel afficheur tête-haute HMD est connu de l'homme du métier et une description détaillée d'un tel dispositif sortirait du cadre de l'invention. Pour une description de tels dispositifs, on pourra se référer notamment aux demandes de brevet FR1901166, FR1901163, EP15166318 ou encore WO2016071352A1.

L'afficheur tête-haute HMD comprend un processeur UT adapté pour mettre en oeuvre les étapes de la méthode de l'invention illustrées schématiquement dans la figure 2 lorsque l'afficheur HMD est porté dans un environnement EP prédéterminé comprenant une pluralité d'interfaces d'information IN1-IN6.

Par « interfaces d'information », on entend ici tout élément observable par l'utilisateur U présentant une information relative directement ou indirectement à l'environnement EP. Par exemple, selon un mode de réalisation, l'environnement EP est un poste de pilotage d'un aéronef et les interfaces d'information comprennent des dispositifs HUD, *l'electronic flight bag,* les instruments de vol de pilotage, de navigation, des groupes motopropulseurs, de télécommunication, de consommation de carburant, etc ... et plus généralement tout élément du cockpit.

A titre d'exemple non limitatif, dans le mode de réalisation de la figure 1, l'environnement comprend six interfaces d'information IN1-IN6 et un pare-brise PB permettant une visualisation du paysage. Selon un autre mode de réalisation, le nombre d'interfaces d'information et de pare-brise est différent. On peut assimiler le pare-brise à une septième interface IN7 présentant une information visuelle sur l'environnement extérieur (paysage).

Selon un premier mode de réalisation, l'environnement EP dans lequel est porté l'afficheur HMD est un environnement physique. Les interfaces IN1-IN7 sont donc des objets physiques.

Alternativement, selon un deuxième mode de réalisation, l'environnement EP est un environnement virtuel, par exemple généré par le processeur UT. Dans le deuxième mode de réalisation, les interfaces IN1-IN7 sont donc des objets virtuels générés et non pas des objets physiques comme dans le premier mode de réalisation. Cependant, cela ne modifie en rien le procédé de l'invention.

Le processeur UT comprend des informations relatives à un agencement spatial de l'environnement EP, dites informations spatiales IS. Ces informations spatiales IS comprennent par exemple la position des interfaces d'information IN1-IN7 dans un repère xyz et leurs dimensions. Ces informations spatiales sont préférentiellement stockées dans le processeur UT préalablement à la mise en oeuvre du procédé de l'invention.

Le dispositif DPO est adapté pour détecter une position et une orientation d'une tête de l'utilisateur U de l'afficheur tête-haute HMD et pour transmettre cette donnée IP au processeur UT. La donnée IP comprend donc la position de la tête dans le repère xyz et son orientation par une mesure de l'élévation et de l'azimuth dans ce repère. De manière préférentielle, la donnée IP est transmise par un câble afin de rendre le système 1 plus robuste.

Un tel dispositif DPO est connu de l'homme du métier et une description détaillée de ce dispositif sortirait du cadre de l'invention.

Selon une première variante, cette mesure de la position et de l'orientation est effectuée par une méthode optique, le dispositif DPO comprenant par exemple des caméras disposées dans l'environnement EP pour déterminer la donnée IP par des méthodes de traitement d'image.

Alternativement, selon une deuxième variante, le dispositif DPO comprend un ou plusieurs capteurs inertiels pour déterminer la donnée IP. Selon un mode de réalisation, le dispositif DPO est « hybride » et la détermination de la donnée IP est effectuée par une combinaison d'une méthode optique et d'une méthode mettant en oeuvre un ou plusieurs capteurs inertiels.

Selon une troisième variante, le dispositif DPO comprend un élément pour générer un champ électromagnétique avec une distribution spatiale prédéterminé dans l'environnement EP et comprend des récepteurs pour détecter un champ électromagnétique. La donnée IP est générée en effectuer une mesure de l'intensité du champ détecté par les récepteurs, compte tenu de la distribution spatiale prédéterminé du champ électromagnétique.

Selon le mode de réalisation illustré dans la figure 1, le dispositif DPO n'est pas compris dans l'afficheur tête-haute HMD mais est un élément physiquement dissocié de ce dernier. Alternativement, selon un autre mode de réalisation, le dispositif DPO est compris dans l'afficheur tête-haute HMD. Dans ce mode de réalisation, le processeur UT peut être lui-même adapté pour générer la donnée IP. Le choix de déporter ou non le dispositif DPO de l'afficheur tête-haute HMD dépend essentiellement de la technique de détection de posture mise en oeuvre. De manière préférentielle, le dispositif DPO est configuré pour que la position de la tête soit déterminée avec une précision inférieure ou égale à 5 mm et pour que l'orientation de la tête soit déterminée avec une précision inférieure à 5 mrad afin de permettre une adaptation précise de l'affichage en fonction de la posture de l'utilisateur.

Dans une première étape A1 du procédé de l'invention, le processeur UT de l'afficheur HMD est adapté pour déterminer une première donnée D1 relative à la position et l'orientation de la tête de l'utilisateur U par rapport à l'environnement EP. Cette donnée D1 est déterminée à partir de la donnée IP transmise par le dispositif DPO et à partir des informations spatiales IS.

Après l'étape A1, le procédé de l'invention comprend une étape B mise en oeuvre par le processeur UT consistant à modifier la luminance de l'afficheur tête-haute HMD et/ou ajuster les messages graphiques, en fonction d'un ensemble de données comprenant la première donnée D1 et comprenant des informations relatives aux interfaces, notées II.

Comme les informations spatiales IS, les informations relatives aux interfaces Il sont préférentiellement stockées dans le processeur UT avant la mise en oeuvre du procédé de l'invention.

A titre d'exemple non limitatif, les informations Il relatives aux interfaces comprennent, pour chaque interface :
- le contenu présenté par l'interface (c'est-à-dire le type d'information présentée, par exemple l'altitude lorsque l'interface considérée est un altimètre)
- optionnellement, la couleur et la luminosité du contenu
- optionnellement, la priorité de l'interface.

Par « priorité », on entend ici que l'interface considérée présente des informations critiques à la mission qui sont nécessairement prioritaires à celles affichées par l'afficheur HMD. Selon un mode de réalisation, cette priorité est indiquée sous la forme d'une valeur numérique, par exemple 0 pour non prioritaire ou 1 pour prioritaire. Il est entendu que l'échelle numérique peut comprendre plus de deux valeurs pour quantifier plus de deux niveaux de priorité dans certains modes de réalisation.

Il est entendu que le procédé de l'invention est dynamique, c'est-à-dire que les étapes A1 et B sont répétées au cours du temps afin de tenir compte d'un changement de posture de l'utilisateur. Afin d'obtenir un affichage suffisamment réactif à un changement de posture, les étapes du procédé de l'invention sont répétées avec une période inférieure ou égale à 100 *ms* préférentiellement inférieure ou égale à 10 ms.

L'étape B permet un réglage de la luminance de l'afficheur tête-haute HMD et/ou des messages graphiques directement dans l'afficheur HMD afin de traiter le problème du *cluttering* de manière automatisée. Il est entendu que l'invention couvre de nombreuses mises en oeuvre possibles de l'étape B sans sortir du cadre de l'invention. La suite de la description détaille des mises en oeuvre préférées de l'étape B qui ne constituent aucunement une liste exhaustive de toutes les mises en oeuvre couvertes par l'invention.

De manière générale, dans l'étape B, l'ajustement des messages graphiques comprend l'ajustement du contenu et/ou du nombre et/ou d'une position des messages graphiques affichés dans le champ de vue FOV par l'afficheur HMD. Par « contenu d'un message graphique », on entend ici la couleur du message graphique, la luminosité du message graphique, la couleur, le type de tracé (trait plein, double, pointillé, ...) et l'épaisseur du bord du message graphique, etc...

Selon un mode de réalisation préféré, noté MP1, la détermination de la donnée D1 est effectuée par les sous étapes suivantes :
i. recevoir la donnée IP relative à la position et l'orientation de la tête
ii. déterminer, à partir de la donnée IP et des données IS, une coïncidence du champ de vue FOV avec les interfaces. La première donnée D1 comprend alors une indication concernant ces coïncidences, par exemple sous la forme d'une valeur numérique comme 0 pour indiquer non coïncidence et 1 pour indiquer une coïncidence.

Par « coïncidence du champ de vue FOV avec les interfaces », on entend ici un chevauchement même partiel du champ de vue FOV avec les interfaces. La détermination de cette coïncidence est directement déductible à partir de la donnée IP (mesure de la posture) et des données IS (informations spatiales de l'environnement EP).

A titre d'exemple non limitatif, dans la figure 1, la donnée D1 est sous la forme suivante : *D*1 = (*C*₁ = 1; *C*₂ = 1; *C*₃ = 0; *C*₃ = 0; *C*₄ = 0; *C*₅ = 0; *C*₆ = 0; *C*₇ = 0) correspondant à l'indication selon laquelle le champ de vue FOV coïncide avec les interfaces IN1 et IN2 et ne coïncide pas avec les interfaces IN3 à IN7.

De manière préférentielle, dans un mode de réalisation MP2, la sous étape ii) comprend la détermination d'une superposition de l'axe de visée AV avec les interfaces. La première donnée D1 comprend alors une indication concernant les coïncidences et les superpositions, par exemple sous la forme d'une valeur numérique comme 0 pour indiquer non coïncidence ou une non superposition et 1 pour indiquer une coïncidence ou une superposition.

A titre d'exemple non limitatif dans la figure 1, la donnée D1 est sous la forme suivante : *D*1 = [(*C*₁ = 1; *C*₂ = 1; *C*₃ = 0; *C*₃ = 0; *C*₄ = 0; *C*₅ = 0; *C*₆ = 0; *C*₇ = 0); *S*₁] correspondant à l'indication selon laquelle le champ de vue FOV coïncide avec les interfaces IN1 et IN2 et ne coïncide pas avec les interfaces IN3 à IN7 et l'indication *S*₁ selon laquelle l'axe de visée AV est superposé avec l'interface IN1.

La gestion simultanée de la coïncidence et de la superposition permet de définir des « sous niveaux » d'affichage de messages graphiques dans l'étape B :
- un premier sous niveau d'affichage dit « intermédiaire » correspondant à une coïncidence du champ de vue FOV avec une interface mais sans superposition de l'axe de visée AV avec ladite interface. Dans ce cas, on supprime un nombre *N* ≥ 1 de messages graphiques en fonction de l'information présentée par ladite interface.
- un deuxième sous niveau d'affichage dit « allégé » correspondant à une coïncidence du champ de vue FOV et une superposition de l'axe de visée AV avec l'interface. Dans ce cas, on supprime un nombre *M* > *N* de messages graphiques en fonction de l'information présentée par ladite interface.

De manière préférentielle, l'étape B consiste à afficher uniquement des messages graphiques présentant des informations différentes de celles présentées dans la ou les interfaces d'information pour lesquelles il existe une coïncidence du champ de vue FOV ou de l'axe de visée AV. Autrement dit, dans ce mode de réalisation, l'étape B consiste à supprimer au moins un des messages graphiques - dit message redondant- lorsque la donnée D1 et les informations Il indiquent que le champ de vue FOV coïncide avec une interface affichant le message redondant ou une information équivalente. Par « information équivalente », on entend une information équivalente du point du vue de l'utilisateur, par exemple une vitesse en unité Mach ou en unité km/h.

Selon un mode de réalisation, les informations Il indiquent qu'une interface affiche une pluralité d'informations (par exemple un *HUD*)*.* Alors, lorsque la donnée D1 indique que l'axe de visée AV est superposée et que le champ de vue FOV coïncide avec cette interface, l'étape B supprime un plus grand nombre de message redondant que lorsque la donnée D1 indique que le champ de vue FOV coïncide avec l'interface mais que l'axe de visée AV n'est pas superposée à cette interface : on affiche donc le sous niveau d'affichage « allégé ».

Selon un mode de réalisation, lorsque la première donnée D1 indique une coïncidence du champ de vue FOV avec une interface *INᵢ,* l'étape B consiste à déplacer la position d'un message graphique ou de plusieurs messages graphiques hors de la zone du champ de vue FOV où il existe une coïncidence du champ de vue avec l'interface *INᵢ.* Cela permet d'éviter une superposition dudit message graphique avec l'interface *INᵢ.* De manière préférentielle, cette étape n'est mise en oeuvre uniquement s'il est possible de déplacer ledit ou lesdits messages graphiques sans créer de chevauchement avec d'autres messages graphiques affichés dans l'afficheur HMD.

Cette étape de déplacement peut être combinée avec toutes les mises en oeuvre de l'étape B évoquées décrites dans la présente description. Notamment, cette étape de déplacement peut être combinée avec l'étape consistant à afficher uniquement des messages graphiques présentant des informations différentes de celles présentées dans l'interface *INᵢ.* L'étape de déplacement ne déplace alors que les messages graphiques présentant des informations différentes de celles présentées dans l'interface *INᵢ.*

Selon un mode de réalisation, l'ajustement de contenu dans l'étape B comprend la modification de la couleur du message graphique et/ou de la couleur du bord du message graphique lorsque la première donnée D1 indique une coïncidence du champ de vue avec une interface qui est sensiblement d'une même couleur que celle du message graphique. Cette étape de d'ajustement de contenu peut être combinée avec toutes les mises en oeuvre de l'étape B évoquées décrites dans la présente description.

Afin d'améliorer le confort visuel de l'utilisateur, il est préférable que les messages graphiques ne clignotent pas lorsque l'utilisateur effectue des mouvements infimes de la tête amenant le champ de vue ou l'axe de visée se trouvant au bord d'une interface à effectuer des allers-retours très rapides et involontaires de part et d'autre de ce bord. Pour éviter ce clignotement, il est préférable d'instaurer une zone « tampon » de 0,6° à 6°de chaque côté des bords de chaque interface, dans lequel l'ajustement des messages graphiques n'a pas lieu. L'ajustement des messages graphiques a alors lieu uniquement lorsque la première donnée D1 comprend l'indication selon laquelle l'axe de visée AV est superposé avec une interface *INᵢ,* en étant à plus de 0,6° à 6° d'un bord de cette interface *INᵢ* ou lorsque la première donnée D1 comprend l'indication selon laquelle le champ de vue coïncide de plus de 0,6° à 6° avec cette interface *INᵢ.*

De manière similaire, lorsque l'axe de visée a dépassé la zone tampon du côté intérieur du bord intérieur de l'interface *INᵢ* et que l'ajustement des messages graphiques vis-à-vis de l'interface *INᵢ* a été effectué, la zone tampon du côté extérieur du bord de l'interface *INᵢ* produit son effet. L'ajustement des messages graphiques a alors lieu uniquement lorsque la première donnée D1 comprend l'indication selon laquelle l'axe de visée AV n'est plus superposé avec l'interface *INᵢ,* en étant à plus de 0,6° à 6°d'un bord de cette interface *INᵢ* ou lorsque la première donnée D1 comprend l'indication selon laquelle le champ de vue ne coïncide plus avec l'interface *INᵢ* de plus 0,6° à 6°.

Selon un mode de réalisation, l'afficheur HMD comprend une commande de réglage de l'axe de visée AV, par exemple un *joystick* ou une croix de commande. Le procédé de l'invention selon le mode MP2 comprend alors une étape C postérieure à l'étape B, dans laquelle l'utilisateur modifie une position de l'axe de visée AV dans le champ de vue FOV. Ainsi, lorsque les étapes A1 et B sont ultérieurement mises en oeuvre, l'indication sur la superposition entre l'axe de visée et les interfaces est modifiée. Cette étape C permet d'augmenter le confort de l'utilisateur afin d'éviter qu'il n'incline trop la tête, par exemple pour obtenir une modification de messages graphiques liée à une superposition de l'axe de visée AV avec une interface présentant un angle d'élévation ou d'azimut élevé pour une position de tête donnée.

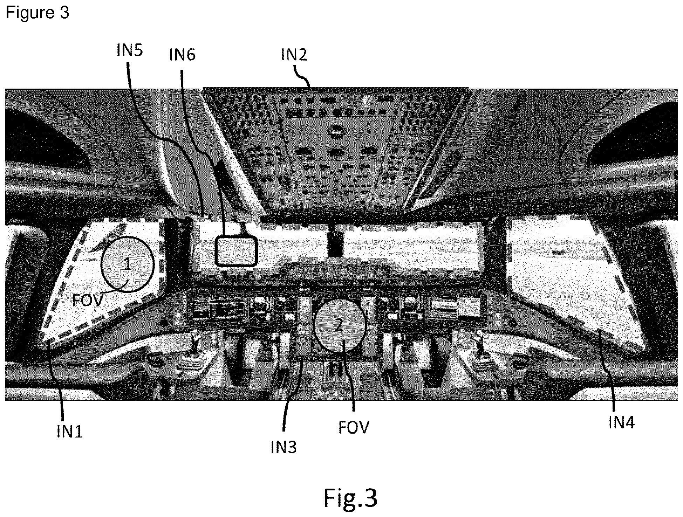

La figure 3 illustre un mode de réalisation dans lequel l'environnement prédéterminé est un poste de pilotage d'un avion de ligne. A titre d'exemple non limitatif, les informations spatiales IS définissent six interfaces IN1-IN6. Les interfaces IN1, IN4 et IN6 sont des pare-brise, l'interface IN2 correspond à un afficheur de type *Over Head Panel* (c'est-à-dire disposé au-dessus de la tête du pilote), l'interface IN3 correspond aux instruments de vol, et l'interface IN6 est comprise dans l'interface IN5 et correspond à un *HUD* central présentant des informations de pilotage par exemple.

Dans la figure 3, à titre d'exemple non limitatif, on a représenté deux positions 1, 2 du champ de vue FOV de l'afficheur HMD.

Dans la position 1, le champ de vue FOV coïncide dans sa totalité avec l'interface IN1 qui est un pare-brise n'affichant aucune information. Dans ce cas, l'étape B comprend un ajustement du nombre de messages graphiques qui consiste à afficher un nombre maximal de messages graphiques.

Dans la position 2, le champ de vue FOV coïncide dans sa totalité avec l'interface IN3 affichant des informations relatives au pilotage et à la navigation. Dans ce cas, l'étape B comprend un ajustement du nombre de messages graphiques qui consiste à supprimer des messages graphiques présentant des informations de navigation et de navigation.

Selon un mode de réalisation de la figure 3, noté M1, l'interface IN6 est considérée comme prioritaire par les informations II. C'est-à-dire que les informations de pilotage sont présentées par l'*HUD* sont considérées comme prioritaires sur les messages graphiques de pilotage affichés par l'afficheur HMD. L'étape B consiste alors à supprimer des messages graphiques présentant des informations de navigation lorsqu'il existe une coïncidence du champ de vue FOV ou une superposition de l'axe de visée AV avec l'interface centrale de type *HUD.* Alternativement, si cette interface est considérée comme non prioritaire, l'étape B ne supprime pas les messages graphiques présentant des informations identiques ou similaires à cette interface.

Selon un autre mode de réalisation, l'interface IN6 est toujours considérée comme prioritaire mais d'un degré de priorité supérieur au degré du mode de réalisation M1. Dans ce cas, on ne souhaite aucune superposition de messages graphiques avec l'interface IN6, à l'exception de messages graphiques considérés comme critiques (par exemple des messages d'avertissement). L'étape B consiste alors à afficher uniquement au moins un des messages graphiques préalablement évalué comme critique, lorsque la première donnée indique que l'axe de visée AV est superposé à l'interface. Cette étape peut être généralisée à toute interface et peut être combinée avec toutes les mises en oeuvre de l'étape B évoquées décrites dans la présente description.

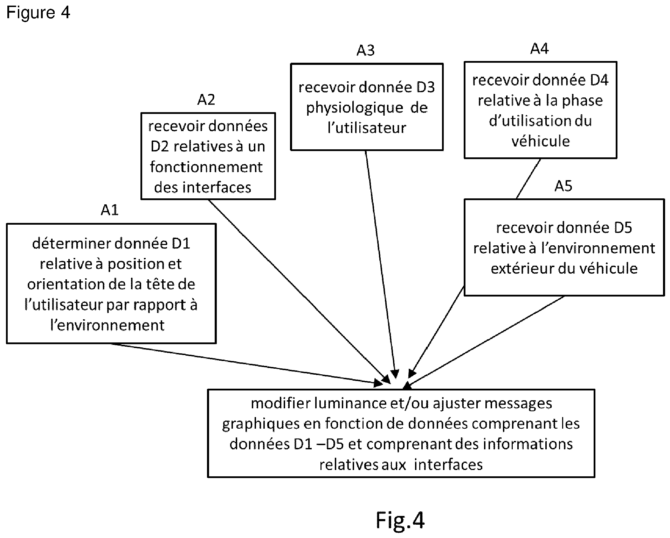

La figure 4 illustre un mode de réalisation de la méthode de l'invention comprenant des étapes additionnelles A2, A3, A4 et A5, mises en oeuvre par le processeur UT avant l'étape B et générant des données D2, D3, D4 et D5 respectivement. Dans ce mode de réalisation, l'étape B consiste à modifier la luminance de l'afficheur tête-haute HMD et/ou ajuster les messages graphiques, en fonction d'un ensemble de données comprenant les données D1 à D5 et comprenant les informations II.

A titre d'exemple non limitatif, dans le mode de réalisation de la figure 4, l'environnement est un poste de pilotage d'un véhicule, par exemple un aéronef, un navire, un véhicule terrestre, etc...

L'étape A2 consiste à recevoir des données relatives à un fonctionnement des interfaces, dites deuxièmes données D2. Par exemple, ces données D2 caractérisent si une interface est en marche (« ON » ou « OFF ») ou si une interface est défaillante. Dans ce mode de réalisation, l'étape B ne modifie pas la luminosité et/ou les messages graphiques lorsqu'il existe une coïncidence du champ de vue FOV ou une superposition de l'axe de visée AV avec une interface identifiée comme défaillante ou « OFF » dans l'étape A2.

Cette étape A2 permet d'éviter une suppression d'information au niveau de l'afficheur qui serait préjudiciable à l'utilisateur.

L'étape A3 consiste à recevoir au moins une donnée physiologique de l'utilisateur, dite troisième donnée D3. Par « donnée physiologique », on entend une donnée relative à la charge cognitive, le stress ou à la fatigue de l'utilisateur.

Cette étape A3 permet d'adapter en étape B l'affichage en fonction de la condition physique et mentale de l'utilisateur pour réduire un danger (par exemple un endormissement), éviter une erreur de l'utilisateur ou encore maximiser l'attention de l'utilisateur.

Dans un mode de réalisation, les données physiologiques comprennent un ou plusieurs des paramètres parmi le rythme cardiaque, la variabilité du rythme cardiaque, le rythme respiratoire, les mouvements des yeux, les fixations du regard, la dilatation pupillaire, le taux de cortisol, la température de la peau, la conductivité de la peau, un ou plusieurs marqueurs de l'activité du système parasympathique, un signal de type électrocardiographie, un signal de type électroencéphalographie, un signal de type magnétoencéphalographie, un signal de type fNIR ou un signal de type fMRI.

Dans un mode de réalisation, le niveau de charge cognitive est déterminé en fonction d'un ou de plusieurs paramètres physiologiques de l'utilisateur (et/ou des dynamiques de ces paramètres), mesurés physiquement et/ou estimés logiquement, directement ou indirectement. La détermination de l'état physiologique de l'utilisateur peut comprendre des mesures directes et/ou indirectes. Les mesures directes peuvent notamment comprendre une ou plusieurs mesures directes du rythme cardiaque et/ou ECG (électrocardiogramme) et/ou EEG (électroencéphalogramme) et/ou de la transpiration et/ou du rythme de la respiration de l'utilisateur. Les mesures indirectes peuvent notamment comprendre des estimations de l'excitation ou de la fatigue ou du stress de l'utilisateur, lesquels états peuvent en particulier être corrélées aux phases de vol ou à d'autres paramètres.

Dans un mode de réalisation, le niveau de charge cognitive, le niveau de stress et la fatigue sont caractérisés dans l'étape A3 par une l'agrégation de données physiologiques mesurées physiquement et directement sur l'utilisateur. Ces valeurs physiologiques peuvent être pondérées entre elles, de manière à définir un score entre des bornes prédéfinies (par exemple entre 0 et 100), éventuellement personnalisable par l'utilisateur.

Selon un mode de réalisation, dans l'étape B on réduit le nombre de messages graphiques et/ou on réduit la luminosité de l'afficheur HMD lorsque les données D3 sont représentatives d'un stress important ou d'une charge cognitive élevée : par exemple un score supérieure à 75 sur une échelle de 0 à 100.

A l'inverse, dans l'étape B, on augmente le nombre de messages graphiques et/ou on augmente la luminosité de l'afficheur HMD lorsque les données D3 sont représentatives d'une fatigue importante (par exemple un score supérieure à 75 sur une échelle de 0 à 100).

L'étape A4 consiste à recevoir au moins une donnée relative à une phase d'utilisation du véhicule, dite quatrième donnée D4.

Cette phase d'utilisation est par exemple la phase actuelle de la mission que suit l'utilisateur du véhicule.

Dans le mode de réalisation où l'environnement est un cockpit d'avion les phases d'utilisation sont par exemple le roulage, le décollage, l'atterrissage, la croisière, manoeuvre (ex : ravitaillement en l'air), etc ...

Cette étape A4 permet d'optimiser en étape B l'affichage en fonction du déroulement de la mission et/ou de la phase trajet du véhicule. Par exemple, en phase de roulage, l'étape B permet la suppression des informations typiquement liées au vol comme l'horizon artificiel, l'altitude, ...

L'étape A5 consiste à recevoir au moins une donnée relative à un environnement extérieur du véhicule, dite cinquième donnée D5. Ces données D5 sont par exemple des données relatives aux conditions de visibilité, aux turbulences, au trafic aérien maritime ou terrestre, à un déroulement diurne ou nocturne du trajet, etc ...

Cette étape A5 permet d'optimiser en étape B l'affichage en fonction des données D5. Par exemple, dans l'étape B on augmente la luminosité de l'afficheur HMD lorsque les données D5 sont représentatives d'une forte luminosité (faible couverture nuageuse et/ou condition diurne). A l'inverse, dans l'étape B on réduit la luminosité de l'afficheur HMD lorsque les données D5 sont représentatives d'une faible luminosité (forte couverture nuageuse et/ou condition nocturne). Alternativement, dans l'étape B, on effectue un affichage synthétique de la piste d'atterrissage en cas de visibilité dégradée (brouillard, neige, ...).

Il est entendu que chacune de ces étapes A2-A5 est optionnelle. Par exemple, selon un mode de réalisation, le procédé de de l'invention consiste à mettre en oeuvre uniquement les étapes A1, A2, A3 et B.

Le procédé de l'invention est particulièrement adapté pour être mis en oeuvre sur ordinateur. Aussi, un autre objet de l'invention est un produit programme d'ordinateur comprenant des instructions de code permettant d'effectuer les étapes du procédé de l'invention lorsque le programme est exécuté sur un ordinateur.

## Revendications

1. Procédé de gestion d'un afficheur tête-haute (HMD) présentant un champ de vue (FOV) et un axe de visée (AV) prédéterminés et adapté pour afficher une pluralité de messages graphiques, ledit procédé comprenant les étapes suivantes mises en oeuvre lorsque ledit afficheur tête-haute est porté par un utilisateur (U) dans un environnement prédéterminé (EP) comprenant une pluralité d'interfaces d'information (IN1-IN6) :
A1. déterminer une première donnée (D1) relative à une position et une orientation d'une tête dudit utilisateur par rapport audit environnement à partir d'informations (IS) relatives à un agencement spatial dudit environnement (EP) B. modifier une luminance dudit afficheur tête-haute et/ou ajuster lesdits messages graphiques, en fonction d'un ensemble de données comprenant la première donnée et comprenant des informations relatives auxdites interfaces (II).

2. Procédé selon la revendication 1, dans lequel ledit ajustement des messages graphiques comprend l'ajustement du contenu et/ou du nombre et/ou d'une position des messages graphiques et dans lequel la première donnée comprend une indication sur une coïncidence du champ de vue avec lesdites interfaces et sur une superposition de l'axe de visée avec lesdites interfaces.

3. Procédé selon la revendication 2, dans lequel ledit ajustement du nombre des messages graphiques comprend la suppression d'au moins un des messages graphiques, dit message redondant, lorsque ladite indication et lesdites informations (II) relatives auxdites interfaces indiquent que le champ de vue de l'afficheur tête-haute coïncide avec une desdites d'interfaces présentant ledit message redondant ou une information équivalente.

4. Procédé selon la revendication 2 ou 3, comprenant une étape C postérieure à l'étape B, dans laquelle l'utilisateur modifie une position de l'axe de visée (AV) dans le champ de vue (FOV) de manière à modifier ladite indication sur une superposition de l'axe de visée avec lesdites interfaces lorsque les étapes A1 et B sont ultérieurement mises en oeuvre.

5. Procédé selon l'une quelconque des revendications 2 à 4, dans lequel ledit ajustement des messages graphiques est effectué uniquement lorsque la première donnée (D1) comprend l'indication selon laquelle l'axe de visée (AV) est superposé avec une desdites interfaces, en étant à plus de 0,6° à 6° d'un bord de ladite interface ou lorsque la première donnée comprend l'indication selon laquelle le champ de vue coïncide de plus de 0,6° à 6° avec une desdites interfaces.

6. Procédé selon l'une quelconque des revendications 2 à 5, comprenant une étape A2 mise en oeuvre avant l'étape B consistant à recevoir des données relatives à un fonctionnement des interfaces, dites deuxièmes données (D2), les deuxièmes données étant comprises dans ledit ensemble de données utilisé dans l'étape B.

7. Procédé selon la revendication précédente, dans lequel l'ajustement du nombre de messages graphiques comprend l'affichage d'uniquement au moins un desdits messages graphiques préalablement évalué comme critique, lorsque la première donnée indique que l'axe de visée est superposé à une desdites interfaces préalablement évaluée comme prioritaire dans lesdites informations relatives auxdites interfaces et lorsque la deuxième donnée indique que ladite interface préalablement évaluée comme prioritaire est en marche.

8. Procédé selon l'une quelconque des revendications précédentes, comprenant une étape A3 mise en oeuvre avant l'étape B consistant à recevoir au moins une donnée physiologique de l'utilisateur, dite troisième donnée (D3), la troisième donnée étant comprise dans ledit ensemble de données utilisé dans l'étape B.

9. Procédé selon l'une quelconque des revendications précédentes, dans lequel ledit environnement est un poste de pilotage d'un véhicule.

10. Procédé selon la revendication précédente, comprenant une étape A4 mise en oeuvre avant l'étape B consistant à recevoir au moins une donnée relative à une phase d'utilisation du véhicule, dite quatrième donnée (D4), la quatrième donnée étant comprise dans ledit ensemble de données utilisé dans l'étape B.

11. Procédé selon la revendication 9 ou 10, comprenant une étape A5 mise en oeuvre avant l'étape B consistant à recevoir au moins une donnée relative à un environnement extérieur du véhicule, dite cinquième donnée (D5), la cinquième donnée étant comprise dans ledit ensemble de données utilisé dans l'étape B.

12. Procédé selon l'une quelconque des revendications 9 à 11 en combinaison avec la revendication 2, dans lequel l'ajustement du nombre de messages graphiques consiste à afficher un nombre maximal de messages graphiques lorsque la première donnée indique que ledit champ de vue est entièrement superposé avec une région du poste de pilotage n'affichant aucun desdits messages graphiques ou des informations équivalentes, par exemple un pare-brise.

13. Procédé selon l'une quelconque des revendications précédentes, dans lequel les étapes du procédé de l'invention sont répétées avec une période inférieure ou égale à 100 *ms,* préférentiellement inférieure à 10 ms.

14. Produit programme d'ordinateur, ledit programme d'ordinateur comprenant des instructions de code permettant d'effectuer les étapes du procédé selon l'une quelconque des revendications 1 à 13, lorsque ledit programme est exécuté sur un ordinateur.

15. Afficheur tête-haute (HMD) destiné à être porté par un utilisateur, ledit afficheur tête-haute présentant un champ de vue et un axe de visée prédéterminés et étant adapté pour afficher une pluralité de messages graphiques, ledit afficheur tête-haute comprenant un processeur (UT) adapté pour mettre en oeuvre les étapes du procédé selon l'une quelconque des revendications 1 à 13 lorsque ledit afficheur tête-haute est porté dans un environnement prédéterminé comprenant une pluralité d'interfaces d'information (IN1-IN6).
